Europäisches Patentamt

(19) European Patent Office

Office européen des brevets

(11) Publication number: **0 278 588 B1**

## (12) EUROPEAN PATENT SPECIFICATION

(45) Date of publication of patent specification :
17.04.91 Bulletin 91/16

(51) Int. Cl.⁵: **B60K 17/34,** B60K 41/02, B60K 23/08

(21) Application number: 88300105.9

(22) Date of filing: 07.01.88

(54) System for controlling torque transmission in a four wheel drive vehicle.

(30) Priority: 23.01.87 US 6207

(43) Date of publication of application :
17.08.88 Bulletin 88/33

(45) Publication of the grant of the patent:
17.04.91 Bulletin 91/16

(84) Designated Contracting States :
DE GB

(56) References cited :
EP-A- 0 189 176
DE-A- 3 427 725
FR-A- 2 509 238
FR-A- 2 577 485

(73) Proprietor: Borg-Warner Automotive, Inc.
3001, West Big Beaver Road
Troy Michigan 48048 (US)

(72) Inventor: Coogan, James Joseph
881 Margaret Street
Des Plaines Illinois 60018 (US)

(74) Representative: Williams, Trevor John et al
J.A. KEMP & CO. 14 South Square Gray's Inn
London WC1R 5EU (GB)

## Description

This invention relates to a system for controlling torque transmission in a four wheel drive vehicle and is particularly applicable for vehicles having a clutch controlled differential mechanism for dividing torque between two output shafts.

Four wheel drive vehicles having a transfer case in the driveline for distributing power to the front and rear drive axles are known in the art. In such vehicles, the transfer case is usually provided with two or more output shafts which are driven by a main or input shaft. The driven shafts may be referred to as output drive shafts since they are used to drive the vehicle road wheels through the drive axles. Some differential in the speed between the shafts is necessary to permit different rotational speeds of the driving wheels to accommodate vehicle steering. It is known to couple these output shafts by means of a differential. In some applications, a bevel gear differential, which evenly splits the torque between the drive axles, is used in the transfer case to drive the front and rear axles at all times, yet allow relative rotation between the axles to accommodate steering geometry. The use of a gear differential in a drive train has one serious drawback. That is, if any road wheel of the vehicle is on a low traction surface, the various axle and transfer case differentials allow that wheel to turn freely. As such, little power or torque is delivered to the remaining wheels.

To minimize wheel slippage, the transfer case differential is sometimes equipped with a manually operated lock-up mechanism. Such a mechanism is operated in either a locked or unlocked condition. When locked, such a mechanism connects the front and rear drive shafts together and positively drives them both. Such a locking mechanism does not allow, however, any differentiation between front and rear drive axle turning speeds.

Several systems has been devised to automatically shift a vehicle from two wheel drive to four wheel drive. With such systems, the front and rear drive wheels are locked together upon the detection of wheel slip. Those systems which automatically shift between two and four wheel drive have several drawbacks. First, such systems do not offer full-time four wheel drive. Thus, the improved vehicle handling and safety characteristics obtainable with full time four wheel drive cannot be achieved with such systems. Second, those systems which automatically shift between open or locked states lack flexibility. Once the system locks the front and rear drive wheels, no speed differential can be incurred therebetween. In many instances (i.e., cornering) it is desirable to shift torque from one drive shaft to the other while allowing speed differences between them. Furthermore, in those instances where a two wheel drive is automatically transmuted into four wheel drive in response to wheel slip, the automatic lock-up characteristic may cause the previously gripping set of wheels to loose traction. Thus, a need remains for a system wherein torque between front and rear drives may be shifted at something less than full lock-up.

There are also those systems which shift a four wheel drive vehicle to two wheel drive in response to a steering sensor. Again, such systems operate in either a locked or unlocked condition. Such systems do not afford the benefits of full-time four wheel drive. In many instances, including cornering, it is desirous to be able to control the torque split between the front and rear wheels. The heretofore known systems do not and cannot offer such abilities.

Starting with these known devices, the task of the present invention resides in the provision of a system which provides continuous or full-time four wheel drive. Unlike other known systems, the present invention includes means for controlling torque distribution between the front and rear wheels in response to vehicle operation.

Generally stated, the present invention provides a system which combines a gear drive having a modulatable clutch mechanism and a control arrangement which modulates or regulates clutch operation to change or modify torque distribution between the front and rear drive axles of a vehicle. More specifically, the present invention includes a transfer case having an input shaft connected to the engine and two power output shafts for driving the front and rear pairs of road wheels. A differential gear arrangement is interposed between the input and output shafts. The gear arrangement inlcudes at least three members which form a gear train The normal torque delivered to the output shafts will be of a fixed proportion or ratio determined by the gear geometry of the gear train. An electromagnetically actuated clutch mechanism, operably disposed between the output shafts, is provided to bias the torque distribution to the wheels of the vehicle. In its presently preferred form, the clutch assembly includes frictionally engageable members for interconnecting two of the differential components or members such that the relative rotation between the output shafts is controlled by a torque level established between the friction members. In operation, the biasing clutch adds driving torque to the slowest turning output shaft and subtracts torque from the fastest turning output shaft in an amount equal to the torque capacity of the clutch. The degree of clutch torque capacity may be modulated from completely free to that equivalent to dry pavement wheel skid torque.

The ability to control or modulate the torque level of the biasing clutch is achieved through a unique electronic control system. The electronic control system generally includes a sensor state, a computing stage, and an actuating stage. The sensor stage includes a series of sensors. The computing stage is interconnected with the sensor stage and develops an output in response to the detection of wheel slip. The output of the computing stage is delivered to the actuator stage. The output of the actuator stage controls the biasing clutch mechanism and thereby the torque split between the drive axles of the vehicle.

The sensor stage of the control system includes a plurality of sensors which monitor vehicle characteristics and provide output signals indicative thereof. The computing stage of the control system includes means for detecting wheel slip and for developing an output indicative thereof. The computing stage further includes means for calculating a maximum torque level to be established by the clutch assembly as a calculated function of the total torque delivered to the transfer case and means, responsive to the detection of wheel slip, for programming clutch torque application over a predetermined time period. The output of the computing stage is delivered to the actuator stage of the control system to regulate the level of clutch energization in a manner biasing torque between the front and rear drive axles. The ability to bias torque to a particular or desired level improves traction control and opens up a new area of programmable vehicle handling characteristics.

Accordingly, a primary object of this invention is to eliminate the disadvantages of the prior art by providing a control system which allows full time four wheel drive and is capable of biasing torque to each drive axle of the vehicle at a particular or desired level to improve traction control.

An important advantage of this invention is that it allows the clutch application to be modulated in a manner biasing the torque to all four wheels and in a manner whereby improving vehicle handling and safety characteristics.

It is another object of this invention to provide a new and improved control system for four wheel drive vehicles which will sense both wheel slip and steering angle and will modify the torque distribution to each drive axle accordingly.

Having in mind the above objects and other attendant advantages that would be evident from an understanding of this disclosure, the invention comprises the devices, combination and arrangement of parts as illustrated in the presently preferred form of the invention which is hereinafter set forth in detail to enable those skilled in the art to readily understand the function, operation, construction and advantages of same when read in conjunction with the accompanying drawings in which :

Figure 1 is a schematic showing of a vehicle to which the present invention is applied ;

Figure 2 is a schematic view of the transfer case of this invention ;

Figure 3 is a cross-sectional view depicting additional structural details of one form of a transfer case useful with the present invention ;

Figure 4 is an enlarged sectional view of a ball ramp mechanism associated with the clutch assembly of this invention ;

Figure 5 is a block diagram of a control system constructed in accordance with the inventive teaching ;

Figure 6 is a block diagram detailing the presently preferred wheel slip detector stage of the control system ;

Figure 7 is a block diagram detailing part of the presently preferred computer stage of the control system ;

Figure 8 is a block diagram detailing another part of the presently preferred computer stage of the control system ; and ;

Figure 9 is a graphical representation useful in understanding the operation of the control system.

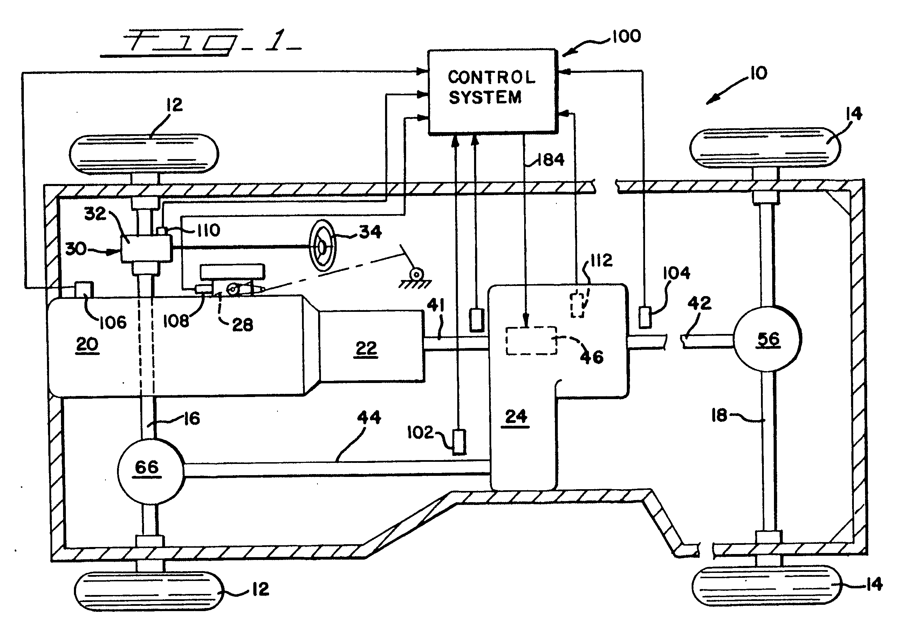

Referring now to the drawings, wherein like reference numerals indicate like parts throughout the several views, in Figure 1 there is schematically illustrated a 4-wheel drive vehicle 10 having front and rear pairs of road wheels 12 and 14, respectively. The road wheels 12 and 14 are mounted on front and rear drive axle means 16 and 18, respectively. The vehicle 10 is further provided with a power train assembly including a power source or engine 20 whose output is transmitted to each drive axle means through a transmission 22 and a drive transfer unit 24 having a center or interaxle differential unit. The engine 20 is provided with a carburator 26 having a spindle mounted valve 28 for regulating the air intake to the induction passage of the carburator wherein an intake manifold vacuum develops. The vehicle may further include steering mechanism means 30. The steering mechanism means 30 includes a steering box 32 operatively connected to a steering wheel 34. With the exception of the transfer case, the purpose and operation of the other parts of the vehicle are well-known and, thus, no further details need be provided therefore.

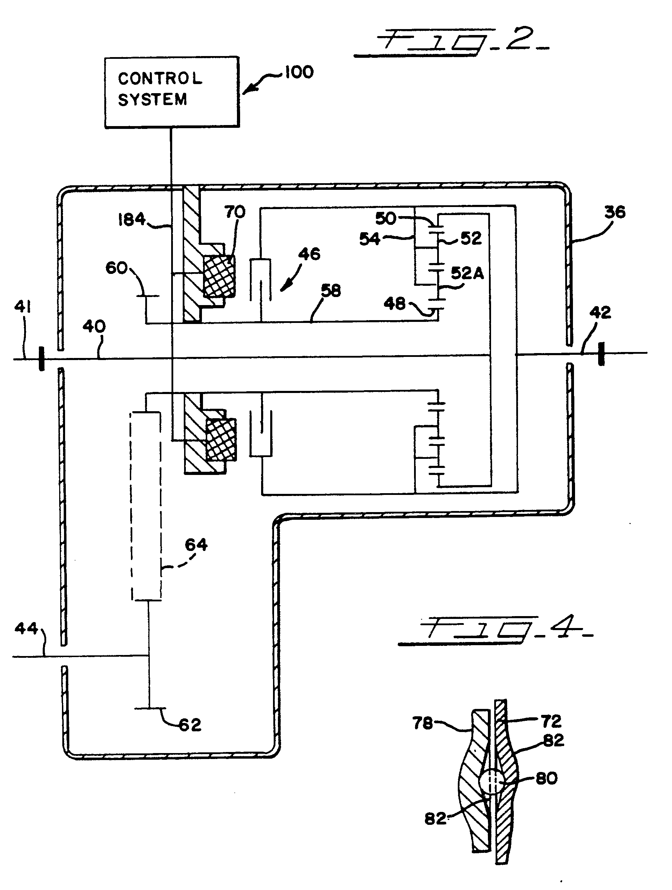

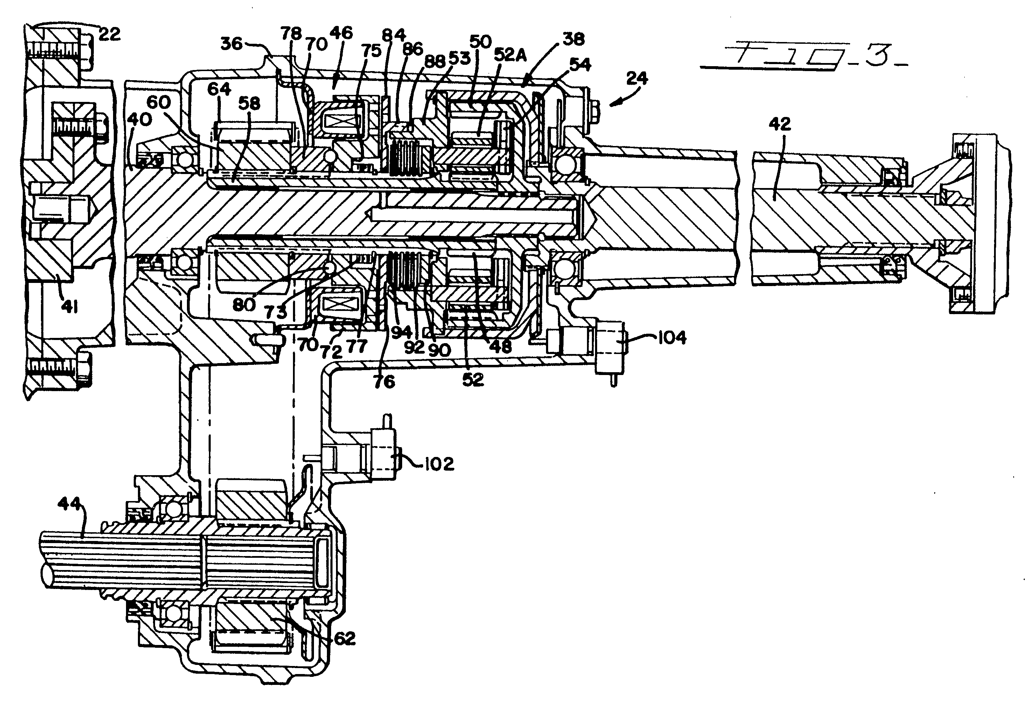

As schematically illustrated in Figures 2 and 3, the components of the drive transfer unit 24 are housed in a separate fluid containing casing or housing 36 and comprise, generally, a gear drive or set 38, a rotatably mounted input drive shaft 40 which is connected to the transmission output shaft 41, two rotary mounted power output shafts 42 and 44, and operative means 46 in the form of an electromagnetic clutch assembly. In the preferred embodiment, the gear drive or set 38 is a center differential unit which includes a planetary gear set. For purposes of this disclosure, however, the terms, "differential" and "differential unit" mean a mechanical connection which divides torque between the front and rear wheels at a ratio determined by a selected gear arrangement.

The presently preferred planetary gear set 38 includes three sets of nested and relatively rotatable elements ; namely, an externally toothed sun gear 48, an internally toothed annulus or ring gear 50, and twin pinion gears 52 and 52A which intermesh with one another and with the sun and ring gears 48 and 50, respectively. The pinion gears 52 and 52A are carried by a planet carrier 54. Depending on the torque transfer desired, any one of the three sets of elements may be connected to the power input shaft 40. In the illustrated embodiment, the sun gear 48 rotates about an axis of rotation thereof and is operably connected to drive output shaft 44. The ring gear 50 is rotatable about an axis of rotation substantially coaxial with the axis of rotation of the sun gear 48 and is operably connected to the input drive shaft 40. The planet carrier 54 of of the differential turns about the axis of rotation of the sun gear and is operably connected to one end of the drive output shaft 42. By this construction, rotary motion of any one shaft effects rotary motion of the other two shafts in a predetermined timed relationship.

Drive output shaft 42 is coaxially mounted in the casing relative to the input shaft 40. As illustrated in Fig. 1, the other end of the rotary power output shaft 42 is connected to a rear differential unit 56. The rear differential unit 56 is connected to and drives the rear wheels 14 thru the rear drive axle means 18. The rear differential unit 56 allows or permits the rear wheels to rotate at different speeds and absorbs rotational speed differences between the wheels.

Returning to Figures 2 and 3 in the illustrated embodiment, the sun gear 48 of the differential unit 38 is arranged on one end of a tubular sleeve shaft 58 which is telescopically mounted for rotation about the input drive shaft 40. Also carried on the sleeve shaft 58 is a first chain wheel 60. The first chain wheel 60 is connected with a second chain wheel 62 by suitable force transfer or chain means 64. The second chain wheel 62 is carried by the other power output shaft 44 of the differential unit. The second power output shaft 44 is spaced laterally from and extends parallel to the output shaft 42 and is rotatably supported in the casing or housing 36. As best illustrated in Fig. 1, the second output shaft 44 is connected to a front differential unit 66. The front differential unit 66 being operably connected to drive the front wheels 12 through the front drive axle means 16. The front differential unit 66 permits or allows the front wheels to rotate at different speeds and absorbs the rotational speed difference between the wheels.

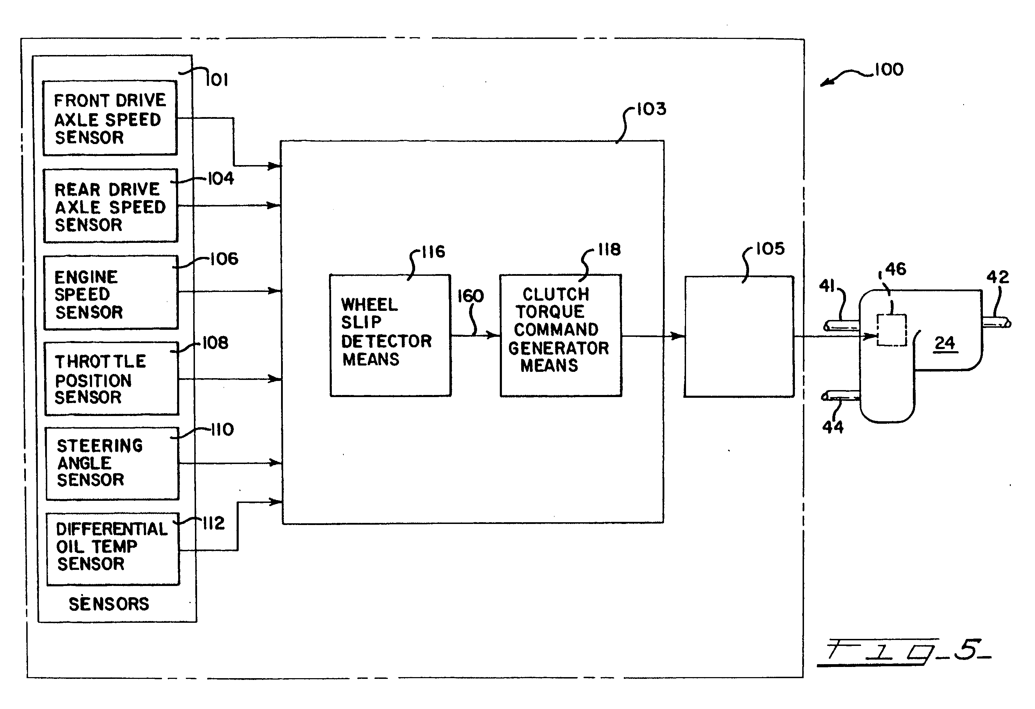

As mentioned above, the transfer unit further includes a biasing clutch assembly 46 for modulating torque transfer through the center differential. That is, the biasing clutch assembly operationally adds to or subtracts from the torque delivered to the drive output shafts. In the preferred embodiment, and as illustrated in Fig. 3, the electromagnetic clutch assembly 46 is comprised of stationary magnetic coil means 70 suitably arranged within the housing 36 and which is partially surrounded by a soft iron rotor 72. As will be subsequently described, suitable electrical conduits or lines provide clutch current to the magnetic coil 70 to generate a magnetic flux. On one side, the rotor 72 is formed with a suitably slotted end face 76. A connecting sleeve or member 78 connected to shaft 58 is provided adjacent the opposite side of the rotor 72. As best illustrated in Fig. 4, the rotor 72 is coupled to the shaft 58 through a ball ramp coupling including a series of loosely movable locking balls 80 which are entrapped within a series of pockets defined by conically shaped recesses or ramps 82 (Fig. 4) provided on both the rotor 72 and the connecting sleeve 78. An important design aspect of this device is that the geometry of the ball/ramp design of the coupling mechanism is such that the clutch assembly is not self locking. This is necessary to ensure that the clutch will not self engage without application of an additional control input and ensures positive release or modulation capability upon removal or decreased control input.

One or more resilient springs 73 are provided to urge the rotor axially toward the connecting member or sleeve 78. Such springs are positioned between a radial surface 75 on the rotor 72 and a snap ring 77 on shaft 58. By this construction, the rotor 72 is automatically positioned to exert substantially no compressive force on the friction clutch when the electromagnet coil 709 is deenergerized.

Returning to Fig. 3, the clutch assembly 46 further includes a suitably slotted armature or friction disc 84. The disc may be provided with recesses or teeth 86 which cooperate in a driving relationship with complementary recesses or teeth 88 provided on an extension 53 of the planet or pinion carrier 52. The disc 84 is capable of axial displacement relative to the shaft 58 and is arranged for friction engagement with the slotted end face 76 of the rotor 72. Axially spaced from the friction disc 84 and connected to the shaft 58 is an annular backing or pressure plate 90. Disposed between the backing plate 90 and the friction disc 84 is a set of mutually interleaved friction plates or discs 92 and 94 respectively associated with the extension 53 and the sleeve shaft 58.

In operation, the magnetic coil means 70 may be initially deenergized and no direct driving connection exists between the output shafts 42 and 44. As such, the torque split to each of the drive axles is determined by the gear geometry of the planetary gear set. Application of clutch current to the stationary coil means 70 generates a magnetic flux which causes the friction disc or armature 84 to be drawn toward the end face 76 of the rotor 72, thereby establishing a frictional driving connection between the rotor 72 and friction disc 84. Because friction disc 84 is operatively connected to the output shaft 42, it will turn at the same rotational speed thereof. Similarly, because the rotor 72 is operatively connected to output shaft 44, through the chain drive and shaft 58, it will turn at the same rotational speed as the output shaft 44. If relative motion exists between the power output shafts 42 and 44, such motion will cause the balls 80 to roll up on the conically shaded recesses 82. As such, the coupling mechanism will forceably and axially move the rotor 72 and friction disc 84, as an assembly, in a manner thereby pressing the friction plates 92 and 94 together with a compression force or wedge action. When pressed together, the friction plates 92 and 94 serve to transmit motive force between the output shafts 42 and 44. As such, the clutch will add torque to the slower turning of the two output shafts and subtract torque from the faster turning or running output shaft. By modulating the clutch current, the relative rotation of the output shafts 42 and 44 may be modulated. That is, with the coupling mechanism being designed to disengage under torque, there must be an additional torque supplied to the preliminary coupling to generate the required axial force for holding the friction plates 92 and 94 in engagement. This torque is supplied by the magnetic clutch assembly 46.

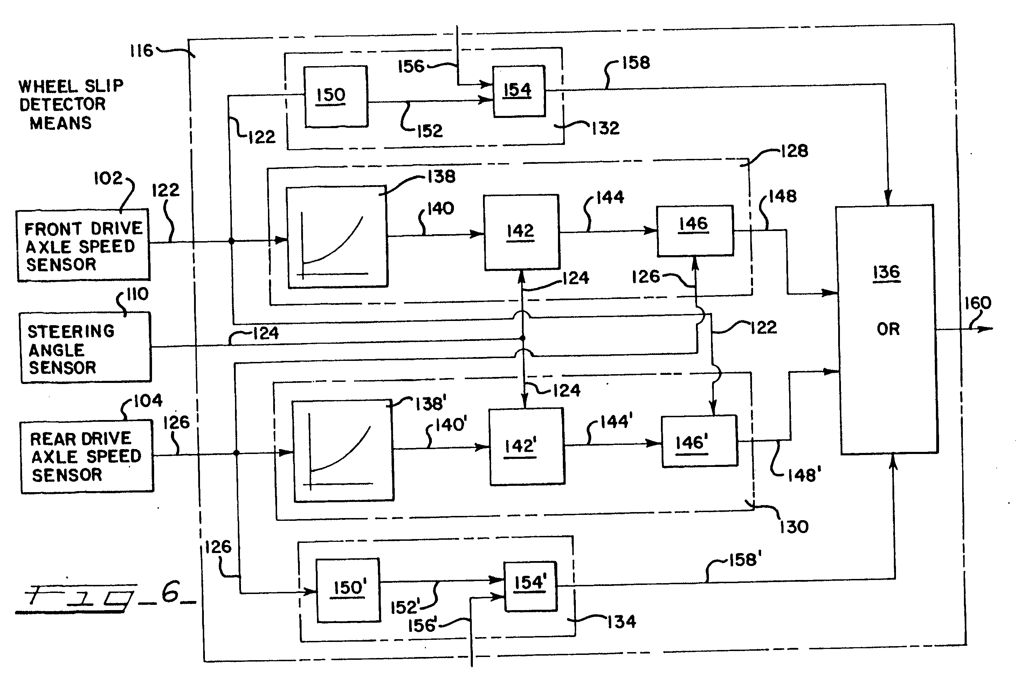

The level of clutch current supplied to the magnetic coil means 70 of the clutch assembly 46 controls the bias torque of the clutch assembly. That is, precise control over the torque bias can be achieved by increasing or decreasing the clutch current to coil 70. In accordance with the present invention, a control system or information processing unit 100 (Fig. 1) is provided for regulating the level of current supplied to the clutch assembly thereby controlling the torque bias between the front and rear drive axle means 44 and 42 respectively. Broadly stated and as may be best illustrated in Fig. 5, the control system 100 is comprised of a sensor stage 101, a computing or controller stage 103, and an actuator stage 105. The sensor stage 101 of the control system includes a series of sensors for monitoring or detecting various vehicle operation conditions. The computing or controlling stage 103 of the control system receives inputs from each of the sensors included in the sensor stage and develops an output which is calculated as a function of the total torque delivered to the transfer case 24. This output is delivered to the actuator stage 103 of the control system to regulate the level of clutch energization in a manner controlling the torque bias established between the front and rear drive axles 44 and 42, respectively. With this overall perspective of the control system, the details of each stage comprising the controlling system will now be described.

The sensor stage 101 of the control system includes a plurality of sensors 102, 104, 106, 108, 110 and 112 which monitor variable vehicle operation conditions. Typically, sensor 102 may be positioned (Figure 3) to detect the rotational speed of drive shaft 44 and sensor 104 may be positioned (Figure 3) to detect the rotational speed of drive shaft 42. The sensors 102 and 104 may be of conventional design such as magnetic sensors which provide an output pulse upon passage of each tooth of a gear or rotor secured to turn with the respective output shaft. As such, the frequency of each sensor signal is proportional to the rotational speed of the respective output shaft. Sensors 106 and 108 monitor engine operating conditions. Specifically, sensor 106 (Fig. 1) develops a signal indicative of the present engine speed. Sensor 108 (Fig. 1) may take the form of a potentiometer or other suitable device for detecting the load on the engine – as chosen by the operator – and for applying an output signal to the control system indicative of such load. Alternatively, sensors 106 and 108 could be replaced by a true torque sensor. Steering angle sensor 110 (Fig. 1) monitors the steering angle of the front road wheels 12 and produces a signal indicative of such condition. Furthermore, a differential oil temperature sensor 112 may be provided to monitor the temperature of the differential oil and in the fluid case 24 for developing an output signal indicative of same.

The output of the sensors act as inputs to the control or computing stage 103 of the control system. The computing stage 103 includes means for receiving input signals from the various sensor means and further includes analog and/or digital electronic calculation and logic circuitry, preferably microcomputers based.

The computing or controller stage 103 of the control system includes wheel slip detection means 116 and clutch torque command generator means 118. The object or purpose of the wheel slip detector means is to detect when any of the four road wheels has lost traction. The wheel slip detector means 116 includes means for receiving signals indicative of vehicle performance from the front and rear drive shaft speed sensors 102 and 104. In operation, the wheel slip detector means functions to compare the front and rear drive shaft rotational speeds against each other and as a function of the vehicle's steering angle. If the wheel slip detector means detects or computes inordinate wheel slip, an output or trigger signal is applied over line 160 to the clutch torque command generator means 118. An output produced over line 160 indicates that traction between the road wheels and the surface has been broken. In addition to the wheel slip indication received over line 160, the clutch torque command generator means uses engine data from the engine speed sensor 106 and throttle position sensor 108. The purpose of the clutch torque command generator means 118 is to develop a time dependent control output which is delivered to the actuator stage 103 of the control system for controlling or regulating energization of the electromagnetic clutch 46.

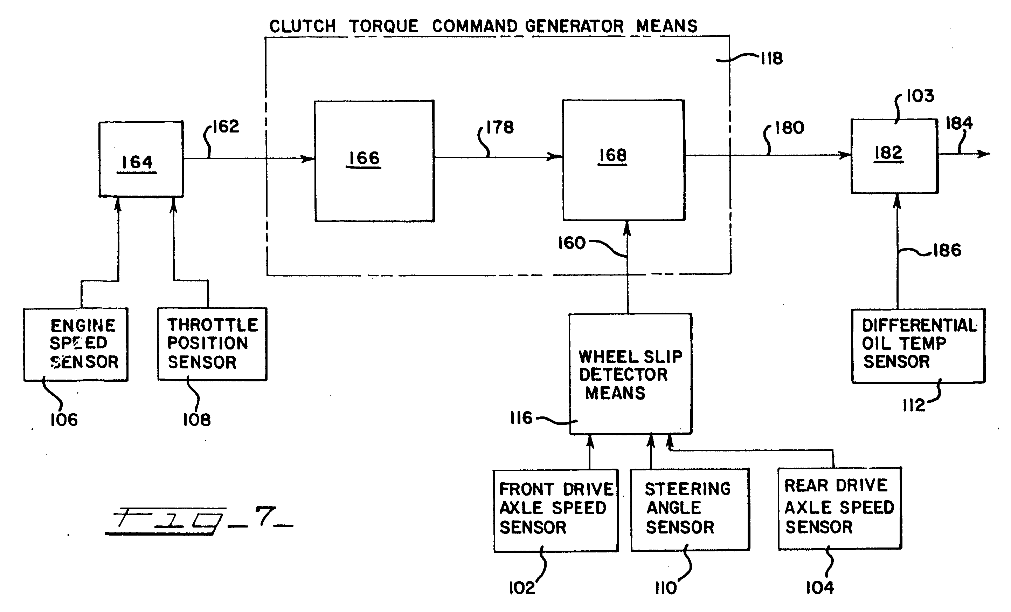

The wheel slip detector means 116 is provided with operative means capable of detecting when one or more of the road wheels has lost traction with the surface. As a skilled artisan may readily appreciate, such operative means may take many forms. The various and presently preferred functions of such operative means being illustrated in the block diagrams of Figure 6. As illustrated therein, the wheel slip detection means 116 receives input data from three sensors. That is, the front shaft speed sensor 102, the steering angle sensor 110, and the rear shaft speed sensor 104 all provide inputs along lines 122, 124 and 126 respectively, to the wheel slip detector means 116. In its preferred form, the slip detector 116 has two methods of detecting wheel slip. One is based on relative speed of the two output shafts 44 and 42. The other method of wheel slip detection is based on the acceleration of the individual drive shafts 44 and 42. To accomplish these ends, wheel slip detector means 116 includes four signal translation paths 128, 130, 132 and 134 all of which lead to an "OR" circuit 136. A wheel slip indication received by the "OR" circuit 136 from any one of the signal translation paths will produce an output signal indicative of wheel slip.

The first signal translation path 128 receives inputs from the front drive shaft sensor 102 over line 122. Inputs indicative of front drive shaft rotational speed are compared against preselected values at a comparison stage 138. At stage 138, the input from the sensor 102 is used to generate a maximum rear drive shaft speed limit. The output of stage 138 is delivered over line 140 and acts as an input to another computation stage 142. To allow for shaft speed differences which may be encountered in cornering maneuvers, another input over line 124, indicative of the present steering angle, is also provided to the computation stage 142. Computation stage 142 produces an output which is a theoretical computation of what the maximum turning rate of the rear wheel should be based on the present revolution rate of the front drive shaft 44 and the present steering angle. The output of computation stage 142, which indicates how fast the rear wheels should be turning given the monitored conditions, is delivered over line 144 and is received by comparator stage 146. Comparator stage 146 is also connected over line 126 to the rear drive shaft speed sensor 104. The inputs from computation stage 142 and from speed sensor 104 are processed in the comparator stage 146 and a judgment is made whether the rear wheels are turning at a speed indicative of slip conditions. If a wheel slip condition is sensed or computed, comparator stage 146 delivers, over line 148, a wheel slip indication to the "OR" circuit 136 of the wheel slip indicator means 116. It will be understood that the signal translation path 130 has essentially the same computation stages as those comprising translation path 128. Because the stages along path 130 are essentially the same and operate in essentially the same manner as those in signal translation path 128, the stages thereof are provided with similar reference numerals. An upper speed limit for the monitored front shaft speed is computed by the second translation 130 path and is used in analagous way to that speed limit developed by signal path 128.

This relative speed method for detecting wheel slip can be operated more precisely than those of other systems for several reasons. First, the slip detecting method is sensitive to steering angle, which generates speed differences that do not constitute wheel slip. Therefore, this method can distinguish the source of the speed difference and thereby operate at tighter tolerances. Second, the allowable speed differences can be set separately for front wheel over speed and rear wheel over speed. Third, allowable speed differences can be programmed as a function of vehicle speed, to give tight and loose tolerances as required by driving conditions.

The signal translation paths 132 and 134 provide an acceleration method for detecting wheel slip. The signal translation path 132 also derives input from the front drive shaft speed sensor 102 over line 122. Inputs along path 132 are first received at a differentiator stage 150. The differentiator stage converts these inputs into an acceleration signal. Alternatively, a shaft acceleration sensor could be used in place of the differentiator stage. The output from the differentiator stage 150 is delivered over line 152 and acts as one of two inputs to a comparator stage 154. The other input to the comparator stage 154 is delivered over line 156 and represents a front drive shaft acceleration limit value. The front drive axle acceleration limit value is predetermined in the comparator stage by setting a value which cannot be exceeded without the road wheels losing traction with the surface. The output from the differentiator 150 and the acceleration limit value are processed in the comparator stage 154 and a judgement is made whether the acceleration of the monitored shaft exceeds the limit value such that slip conditions are indicated. If a wheel slip condition is sensed or computed, comparator stage 154 delivers, over line 158, a wheel slip indication to the "OR" circuit. The signal translation path 134 has essentially the same computation stages as those comprising translation path 132. The acceleration limits and values of path 134 are computed and used in an analagous way to those computed along path 132. Therefore, the stages of path 134 are characterized with similar reference numerals as those in path 132. As mentioned above a slip indication from any one of the four signal translation paths 128, 130, 132 or 134 to the "OR" circuit 136 will trigger an output signal over line 160 which signal indicates wheel slip.

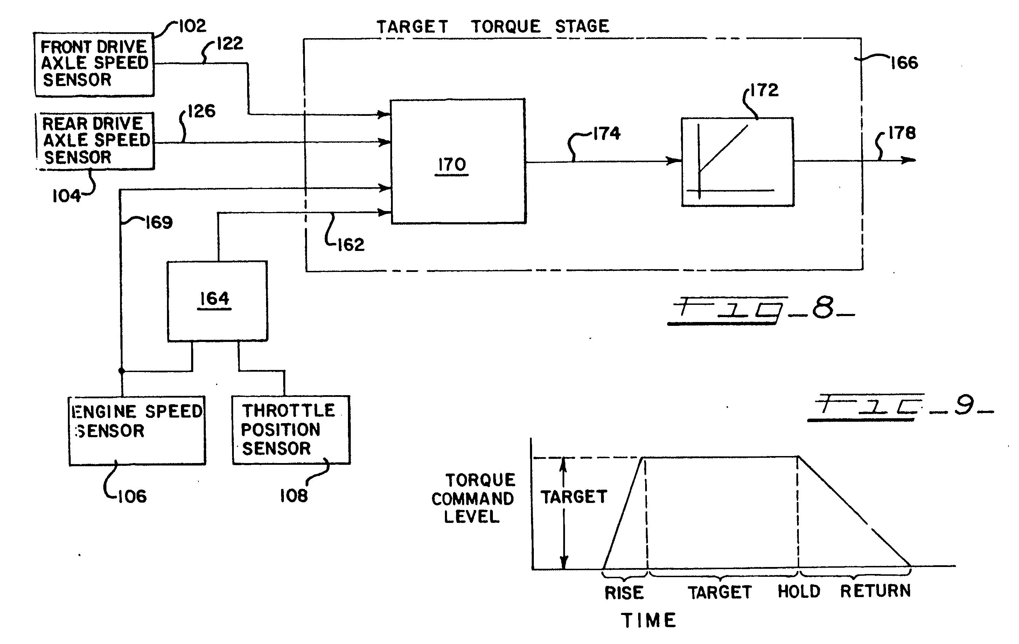

Figure 7 is a block diagram showing the main or primary stages of the clutch torque command generator means 118. As indicated, in its present form, the clutch torque command generator means 118 reads and computes input from two sources and develops an output signal over line 180. One input source is provided by the wheel slip detector means 116 over line 160. The other input sensor represents engine data and is provided to the clutch torque command generator means over line 162. The purpose of the clutch torque command generator means 118 is to compute or determine a desired clutch torque level and to produce a torque command or output reflective of the desired clutch torque level at a particular time.

Derivation of a wheel slip indication was discussed in detail above and, thus, no further detail will be provided therefore. As with the wheel slip indicator means 116, the clutch torque command generator means 118 may take more than one form. The block diagram of Figure 7 being illustrative of the various functions and stages included within the clutch torque command generator means 118. It should be appreciated, however, that other forms may be provided without distracting from the scope of the present invention. Engine data is provided to the clutch torque command generator means 118 over line 162. Engine data is derived from two signals. That is, the engine speed sensor means 106 and the throttle position sensor 108 both provide signals to a processor 164. In a known manner, the processor produces an output reflective of engine torque. Basically, the clutch torque command generator means includes two stages. First, there is a target torque stage 166. The target torque stage 166 operates in combination with a profile generator stage 168. The purpose of the target torque stage 166 is to determine an appropriate target torque level for the clutch assembly. That is the target torque stage 166 sets a particular or controlled level of torque which is based on the input torque to the transfer case. The purpose of the profile stage 168 is to create a time dependent torque command which is delivered over line 180 to the actuation stage 103 of the control system.

Figure 8 is a block diagram illustrating the functions or stages of the target torque stage 166. As illustrated in its preferred form, the target torque stage 166 has first and second computing stages 170 and 172. A plurality of inputs indicative of engine torque over line 162, engine speed from speed sensor 106 over line 169, and front and rear drive shaft speeds from sensors 102 and 104 over lines 122 and 126, are all provided to the first computing stage 170. As mentioned above, measurements of engine speed and throttle position are used by apparatus 164 to compute the engine output torque. At the first stage 170, the measurement of engine speed and the transfer case output shaft speeds is used to compute the transmission gear ratio. At the first stage, the engine output torque and transmission gear ratio are further processed to determine the total input torque to the transfer case. The output of stage 170 is delivered over line 174 and represents the level of total torque imparted to the input shaft 41 of the transfer case 24.

The next step is to establish an appropriate torque level to be applied in the even of wheel slippage. This additional step is accomplished in the second computing stage 172 of the target torque stage 166. The second stage 172 of the target torque stage is so devised that it will set a target or maximum controlled level of torque for the clutch as a function of the level of total torque imparted to the transfer case. It should be appreciated, that the target torque level signal may be less than that required to fully lock the clutch. The output of the second stage 170 is delivered from the target torque stage 166 over line 178.

Returning to Figure 7, the output of the target torque stage 166 is delivered over line 178 and serves as one input to the profile generator stage 168. The profile generator stage 168 is responsive to two inputs. The other input to stage 168 is received over line 160 from the wheel slip indicator means 116. When a wheel slip indication is provided by the wheel slip indicator means 116, the profile generator stage 168 then looks to the target torque stage 166 to determine the level of torque to be applied to the clutch.

Figure 9 schematically represents the output developed by the profile generator stage 168. As mentioned above, at the instant the wheel slip indicator means determines wheel slippage, a trigger signal is produced and is delivered over line 160 to the profile generator stage 168. The profile generator stage 168 develops a clutch torque command which causes the clutch torque to increase to a maximum target torque level established by the target stage 166. As schematically illustrated in Figure 9, the clutch torque command will increase over a predetermined period of time referred to as "rise time" phase. The profile generator stage then initiates a "target hold" phase during which the clutch torque command is maintained at a substantially constant target level for a predetermined "target hold" period or phase. At the expiration of the "target hold" phase, the profile generator stage steadily reduces the level of the clutch torque command to its initial setting over a predetermined period referred to as "return time" phase. The duration of each of the above described phases may be individually preset.

During the "rise time" phase, the profile generator stage may receive continued or repeated wheel slip indications from the wheel slip indicator means. That is, the wheel slip indicator means 116 remains active and may indicate wheel slip at any point in the clutch application cycle. The profile generator stage, however, will ignore such indications from the wheel indicator means during "rise time" phase and will continue to ignore such indications from the wheel slip indicator means for a predetermined "lock out" period. After the "lock out" period lapses, the profile generator stage will respond to wheel slip indications by accepting a new torque target and return to the "rise time" phase until the new torque target level is reached. The "target hold" phase and "return time" phases, as previously described, may be interrupted by any number of subsequent retrigger conditions.

As indicated in Figure 7, the output of the clutch torque command generator means 118 is delivered over line 180 to the actuator stage 103 of the control system. The actuator stage 103 may include clutch drive means including a current scaling means 182. The apparatus 182 receives inputs from the torque command generator means 118 and translates the clutch torque commands into a current level corresponding to that necessary to establish the clutch torque level dictated by the torque command generator means 118. The operative means 182 applies the proper current to the electromagnetic energizer 70 over line 184 to produce torque between the friction members of the clutch assembly to a level called for by the clutch torque command generator means 118. The operative means 182 may take the form of a pulse width modulator. Operative means 182 may also receive inputs over line 186 from the temperature sensor means 112. By this construction, the level of current applied to the clutch may be regulated as a function of the operating transfer case fluid temperature and predetermined clutch characteristics, to develop the commanded clutch torque, regardless of temperature.

In operation, speed signals reflective of the drive shaft turning speeds are derived from sensors 102 and 104. These signals along with signals reflective of other present vehicles characteristics are provided as inputs to the computer or command stage 103 of the control system 100. The outputs from sensors 102, 104 and 110 are applied to the wheel slip detector means 116 of the command stage 103 and are simultaneously processed through signal translation paths 128, 130, 132 and 134. A slip indication produced by any one of the signal translation paths will cause the "OR" circuit 136 to produce an output over line 160. The output transmitted over line 160 is a two level output indicating the present or absence of excessive wheel slip.

The output of the wheel slip detector means 116 is received by the clutch torque command generator means 118. The clutch torque command generator means 118 computes a particular or time dependent torque command which controls clutch application. In this manner, the torque applied by the clutch assembly 46 acts in response to the present vehicle conditions and operator demand.

As indicated in Figure 7, the actuator stage 103 of the control system receives commands from the clutch torque command generator means from 118, translates those commands into electrical current, and applies a calculated level of current to the electromagnetic energizer 70 over line 184 whereby energizing the coil 70 for a predetermined length of time. Thereafter, the clutch current is dropped off while the control system constantly monitors continuing vehicle performance and operator demands. If desired, the output of the actuator stage 103 may be modified to control the effective operation of the clutch as as function of the differential oil temperature fluid.

## Claims

1. A system for distributing torque to all four drive wheels of a vehicle (10) powered by an engine (20), said system comprising : a transfer case (24) connectable to said engine (20) and having an input shaft (40) connectable to front and rear drive axles (16, 18), said transfer case further including a differential (38) for interconnecting said input shaft (40) with the front (16) and rear drive axles (18) such that torque is concomitantly transmitted to both of said drive axles ; an electrical control system means (100) for converting input signals thereto relating to operating conditions of said vehicle into output signals in accordance with a predetermined set of criteria, said electrical control system means including means for obtaining a signal indicative of total torque delivered from the engine to the transfer case, wheel slip detector means (116) for detecting a slip condition between said front and rear drive axles and for generating an output, and clutch torque command generator means (118) responsive to the output of said wheel slip detector means for calculating and generating a current output which is computed as a function of total torque delivered to said transfer case (24) ; and an electromagnetically actuated clutch assembly (46) in said transfer case with friction members (92, 94) which are operably effective to interconnect two members of said differential (38), wherein the current output of said clutch torque command generator means (118) regulates the electromagnetic clutch assembly (46) in a manner to control the operable effectiveness of said clutch assembly and thereby to control torque transmission to the front and rear drive axles as a function of a torque level established between the friction members (92, 94) of said clutch assembly.

2. A system according to claim 1, wherein said engine (20) includes a positionable throttle (28) and the total torque delivered to the transfer case (24) is calculated from monitoring engine speed, engine throttle position and the respective speeds of said two power shafts.

3. A system according to claim 1 or 2, wherein said clutch torque command generator means (118) includes a first means (166) for establishing a predetermined target torque level as a function of the total torque delivered to the transfer case and a second means (168) responsive to wheel slip indications from said wheel slip detector means (116).

4. A system according to claim 3, wherein said second means (168) includes means for increasing the torque level to the target torque level over a predetermined time period and then maintaining the torque level generally constant for a second predetermined time period.

5. A system according to any preceding claim, for controlling torque transmission between an engine (20) of a four wheel drive vehicle (10) and each of its driven wheels (12, 14), two (12) of which steer the vehicle and are driven by front drive axle means (16) and two of which are driven by rear drive axle means (18), wherein the electromagnetically actuated clutch assembly (46) has a series of interleaved friction members (92, 94) which are permitted to turn relative to one another when the clutch assembly (46) is less than fully engaged, some of said friction members being arranged to turn with one output shaft and the remainder turning with the other output shaft.

6. A system according to claim 5, wherein said control system (100) further receives an input indicative of the steering angle of the vehicle.

7. A system according to any preceding claim, wherein said wheel slip detector means (116) includes apparatus (132, 134, 136) for determining wheel slip as a function of output shaft acceleration.

8. A system according to any preceding claim, wherein said wheel slip detector means (116) includes apparatus (128, 130, 138) for determining wheel slip as a function of the relative turning speeds of said output shafts.

9. A system according to any preceding claim, wherein the clutch assembly (46) is initially applied with a predetermined rise in the torque level to be established between the friction members (92, 94) of the clutch for a predetermined time period followed by a substantially constant torque level application for a second predetermined time period.

10. A system according to any preceding claim, wherein said transfer case (24) includes a fluid containing housing (36) in which said clutch assembly (46) is arranged, and said control system (100) receives input from a fluid temperature sensor (112) which monitors the fluid temperature in said housing (36) and generates an output indicative thereof and wherein the current applied to said clutch assembly is a calculated function of the output generated by said fluid temperature sensor.

**Ansprüche**

1. Vorrichtung zur Drehmomentübertragung für den Allradantrieb eines von einem Motor (20) angetriebenen Fahrzeuges (10), mit einem mit dem Motor (20) verbindbaren Übertragungsgehäuse (24) mit einer mit der Vorder- und Hinterachse (16, 18) verbindbaren Eingangswelle (40), wobei das Übertragungsgehäuse ein Ausgleichsgetriebe (38) zum Verbinden der Eingangswelle (40) mit der Vorderachse (16) und der Hinterachse (18) derart aufweist, dass Drehmoment zu beiden Antriebsachsen gleichzeitig übertragen wird, mit einer elektrischen Steuereinrichtung (100) zum Wandeln von Betriebsbedingungen des Fahrzeuges entsprechenden Eingangssignalen in Ausgangssignale gemäß einer vorbestimmten Anzahl von Kriterien, wobei die Steuereinrichtung Mittel zum Erzeugen eines Signals entsprechend dem vom Motor zum Übertragungsgehäuse gelieferten Gesamtdrehmoment aufweist, ferner Mittel (116) zum Erfassen eines Radschlupfes zwischen den Vorder- und Hinterachsen und zum Erzeugen eines entsprechenden Ausgangssignales, und einen auf das Ausgangssignal der Radschlupferfassungsmittel ansprechenden Kupplungsdrehmomentbefehlsgenerator (118) zum Errechnen und Erzeugen eines Stromausgangssignals, das abhängig von dem an dem Übertragungsgehäuse (24) anliegenden Gesamtdrehmoment errechnet wird ; und mit einer elektromagnetisch betätigten Kupplung (46) in dem Übertragungsgehäuse mit Reibgliedern (92, 94), die zum Verbinden zweier Glieder des Ausgleichsgetriebes (38) betätigbar sind, wobei das Stromausgangssignal des Kupplungsdrehmomentbefehlsgenerators (118) die elektromagnetische Kupplung (46) derart steuert, daß die Wirksamkeit der Betätigung der Kupplung gesteuert und somit die Drehmomentübertragung zu den Vorder- und Hinterachsen abhängig von einem Drehmomentwert gesteuert wird, der zwischen den Reibgliedern (92, 94) der Kupplung festgesetzt wird.

2. Vorrichtung nach Anspruch 1, wobei der Motor (20) eine einstellbare Drossel (28) aufweist und das an das Übertragungsgehäuse (24) übertragene Gesamtdrehmoment aus der Überwachung der Motordrehzahl, der Einstellung der Drossel und der jeweiligen Drehzahlen der beiden Leistungswellen errechnet wird.

3. Vorrichtung nach Anspruch 1 oder 2, wobei der Kupplungsdrehomentbefehlsgenerator (118) erste Mittel (166) zum Festsetzen eines vorbestimmten Vorgabedrehmomentwertes abhängig von dem an das Übertragungsgehäuse übertragenen Gesamtdrehmoment und zweite Mittel (168) aufweist, die auf die Anzeige eines Radschlupfes der Radschlupferfassungsmittel (116) ansprechen.

4. Vorrichtung nach Anspruch 3, wobei die zweiten Mittel (168) Mittel zum Erhöhen des Drehmomentwertes auf den Vorgabedrehmomentwert innerhalb einer vorbestimmten Zeit und dann zum Einhalten des Drehmomentes auf einen im wesentlichen konstanten Wert innerhalb einer zweiten vorbestimmten Zeit aufweisen.

5. Vorrichtung nach einem der vorhergehenden Ansprüche zum Steuern der Drehmomentübertragung zwischen einem Motor (20) eines Allradantriebfahrzeuges (10) und allen angetriebenen Rädern (12, 14), wobei zwei Räder (12) das Fahrzeug lenken und von einer Vorderachse (16) angetrieben sind und von denen zwei Räder von der Hinterachse (18) angetrieben sind, wobei die elektromagnetisch betätigte Kupplung (46) eine Reihe von ineinander verschachtelten Reibgliedern (92, 94) aufweist, die gegeneinander verdrehbar sind, wenn die Kupplung (46) nicht voll betätigt ist, wobei ein Teil der Reibglieder mit einer Ausgangswelle dreht und die übrigen Reibglieder mit der anderen Ausgangswelle drehen.

6. Vorrichtung nach Anspruch 5, wobei die Steuervorrichtung (100) ein Eingangssignal erhält, das den Lenkwinkel des Fahrzeuges anzeigt.

7. Vorrichtung nach einem der vorhergehenden Ansprüche, wobei die Radschlupferfassungsmittel (116) eine Einrichtung (132, 134, 136) zum Bestimmen des Radschlupfes in Abhängigkeit von der Beschleunigung der Ausgangswelle aufweist.

8. Vorrichtung nach einem der vorhergehenden Ansprüche, wobei die Radschlupferfassungsmittel (116) eine Vorrichtung (128, 130, 138) zum Bestimmen des Radschlupfes abhängig von den jeweiligen Drehzahlen der Ausgangswellen aufweisen.

9. Vorrichtung nach einem der vorhergehenden Ansprüche, wobei die Kupplung (46) anfänglich für eine vorbestimmte Zeit mit einem vorbestimmten Anstieg des zwischen den Reibgliedern (92, 94) der Kupplung festzusetzenden Drehmomentwertes beaufschlagt wird, worauf für eine zweite vorbestimmte Zeit eine Beaufschlagung mit einem im wesentlichen konstanten Drehmomentwert erfolgt.

10. Vorrichtung nach einem der vorhergehenden Ansprüche, wobei das Übertragungsgehäuse (24) ein flüssigkeitsgefülltes Gehäuse (36) aufweist, in dem die Kupplung (46) angeordnet ist und wobei die Steuervorrichtung (100) ein Eingangssignal von einem Temperaturfühler (112) empfängt, der die Flüssigkeitstemperatur in dem Gehäuse (36) überwacht und ein entsprechendes Ausgangssignal erzeugt und wobei der die Kupplung beaufschlagende Strom abhängig vom Ausgangssignal des Temperaturfühlers errechnet wird.

## Revendications

1. Système pour répartir un couple aux quatre roues motrices d'un véhicule (10) mû par un moteur (20), le système comprenant : une boîte de vitesses intermédiaire (24) pouvant être connectée au moteur (20) et comportant un arbre d'entrée (40) pouvant être relié aux essieux moteurs avant et arrière (16, 18), la boîte de vitesses intermédiaire comportant en outre un différentiel (38) pour interconnecter l'arbre d'entrée (10) aux essieux moteurs avant (16) et arrière (18) de sorte que le couple est transmis simultanément aux deux essieux moteurs, un moyen de système de commande électrique (100) pour convertir des signaux d'entrée qui lui sont appliqués et concernent les conditions de fonctionnement du véhicule en signaux de sortie en conformité avec un ensemble prédéterminé de critères, le moyen de système de commande électrique comportant un moyen pour obtenir un signal représentatif du couple total délivré par le moteur à la boîte de vitesses intermédiaire, un moyen (116) de détecteur de glissement des roues afin de détecter une situation de glissement entre les essieux moteurs avant et arrière et afin de produire une sortie, et un moyen (118) de générateur d'ordre de couple d'embrayage répondant à la sortie du moyen de détecteur du glissement des roues pour calculer et produire un courant de sortie qui est calculé en fonction du couple total délivré à la boîte de vitesses intermédiaire (24) ; et un ensemble (46) à embrayage actionné électromagnétiquement dans la boîte de vitesses intermédiaire avec des éléments de friction (92, 94) qui servent fonctionnellement à interconnecter deux éléments du différentiel (38), où le courant de sortie du moyen (118) de générateur d'ordre de couple de l'embrayage régule l'ensemble (46) à embrayage électromagnétique de façon à contrôler l'efficacité opératoire de l'ensemble à embrayage et ainsi commander la transmission du couple aux essieux moteurs avant et arrière en fonction d'une valeur du couple établi entre les éléments de friction (92, 94) de l'ensemble à embrayage.

2. Système selon la revendication 1, dans lequel le moteur (20) comporte un papillon pouvant être mis en position (28) et le couple total fourni à la boîte de vitesses intermédiaire (24) est calculé à partir de la surveillance de la vitesse du moteur, de la position du papillon du moteur et des vitesses respectives des deux arbres moteurs.

3. Système selon la revendication 1 ou 2, dans lequel le moyen (118) de générateur d'ordre de couple de l'embrayage comporte un premier moyen (166) pour établir une valeur-cible prédéterminée pour le couple en fonction du couple total fourni à la boîte de vitesses intermédiaire et un second moyen (168) répondant aux indications sur le glissement des roues provenant du moyen (116) de détecteur du glissement des roues.

4. Système selon la revendication 3, dans lequel le second moyen (168) comprend un moyen pour augmenter la valeur du couple pour la porter à la valeur-cible du couple dans une durée prédéterminée et pour maintenir alors la valeur du couple à une valeur généralement constante pendant une seconde durée prédéterminée.

5. Système selon l'une quelconque des revendications précédentes, pour commander la transmission du couple entre un moteur (20) d'un véhicule (10) à quatre roues motrices et chacune de ses roues menées (12, 14) dont deux (12) dirigent le véhicule et sont entraînées par un moyen (16) d'essieu moteur avant et dont deux sont entraînées par un moyen (18) d'essieu moteur arrière, où l'ensemble (46) à embrayage actionné électromagnétiquement comporte une série d'éléments de friction entremêlés (92, 94) qui ont la possibilité de tourner les uns par rapport aux autres lorsque l'ensemble (46) à embrayage n'est pas entièrement engagé, une partie des éléments de friction étant disposée de manière à tourner avec un arbre de sortie et le reste tournant avec l'autre arbre de sortie.

6 - Système selon la revendication 5, dans lequel le système de commande (100) reçoit en outre une entrée représentative de l'angle de braquage du vehicule.

7. Système selon l'une quelconque des revendications précédentes, dans lequel le moyen (116) de détecteur du glissement des roues comprend un dispositif (132, 134, 136) pour déterminer le glissement des roues en fonction de l'accélération de l'arbre de sortie.

8. Système selon l'une quelconque des revendications précédentes, dans lequel le moyen (116) de détecteur du glissement des roues comporte un dispositif (128, 130, 138) pour déterminer le glissement des roues en fonction des vitesses de rotation relatives des arbres de sortie.

9. Système selon l'une quelconque des revendications précédentes, dans lequel l'ensemble (46) à embrayage est initialement soumis à une augmentation prédéterminée de la valeur du couple devant être établi entre les éléments de friction (92, 94) de l'embrayage pendant une durée prédéterminée suivie par une application d'une valeur sensiblement constante du couple pendant une seconde durée prédéterminée.

10. Système selon l'une quelconque des revendications précédentes, dans lequel la boîte de vitesses intermédiaire (24) comprend un logement (36) contenant un fluide, dans lequel l'ensemble (46) à embrayage est disposé, et le système de commande (100) reçoit une entrée en provenance d'un capteur (112) de température de fluide qui surveille la température du fluide dans le logement (36) et produit une sortie représentative de celle-ci, et dans lequel le courant appliqué à l'ensemble à embrayage est une fonction calculée de la sortie engendrée par le capteur de la température du fluide.

FIG_1_

CONTROL SYSTEM

EP 0 278 588 B1

_FIG.2._

CONTROL SYSTEM — 100

184

70

50
54    52
52A
48

60

46

58

41

40

42

36

64

44

62

_FIG.4._

78    72
82
80
82

FIG-3

Fig-5-

EP 0 278 588 B1

WHEEL SLIP
DETECTOR
MEANS

FRONT DRIVE
AXLE SPEED
SENSOR

STEERING
ANGLE
SENSOR

REAR DRIVE
AXLE SPEED
SENSOR

136 OR

_Fig_6_

EP 0 278 588 B1

CLUTCH TORQUE COMMAND GENERATOR MEANS

$\boxed{\underline{164}}$ —162→ $\boxed{\underline{166}}$ —178→ $\boxed{\underline{168}}$ —180→ $\boxed{\underline{182}}$ →184

118

103

160

ENGINE SPEED SENSOR — 106

THROTTLE POSITION SENSOR — 108

WHEEL SLIP DETECTOR MEANS — 116

DIFFERENTIAL OIL TEMP SENSOR — 112

186

FRONT DRIVE AXLE SPEED SENSOR — 102

STEERING ANGLE SENSOR — 110

REAR DRIVE AXLE SPEED SENSOR — 104

_FIG_7_

*FIG-8-*

*FIG-9-*